# EUROPÄISCHE PATENTSCHRIFT

(11) **EP 3 366 535 B1**
(45) Veröffentlichungstag und Bekanntmachung des Hinweises auf die Patenterteilung: **24.04.2019**
(21) Anmeldenummer: 17158353.7
(22) Anmeldetag: 28.02.2017
(51) Int. Cl.: B60T 8/42

(54) **DRUCKMODULATOR FÜR EIN ANTIBLOCKIER-BREMSSYSTEM (ABS)**
PRESSURE MODULATOR FOR AN ANTILOCK BRAKE CONTROL SYSTEM (ABS)
MODULATEUR DE PRESSION POUR SYSTÈMES DE FREINAGE À ANTIBLOCAGE (ABS)

(43) Veröffentlichungstag der Anmeldung: 29.08.2018
(73) Patentinhaber: Brake Force One GmbH, 72074 Tübingen (DE)
(72) Erfinder: Lauhoff, Jakob, 72070 Tübingen (DE)
(74) Vertreter: Kohler Schmid Möbus Patentanwälte

(56) Entgegenhaltungen:
- EP-A1- 0 209 817
- DE-A1- 19 501 487
- DE-B3-102014 007 717
- US-A- 5 044 701

## Beschreibung

Die Erfindung betrifft einen Druckmodulator für ein ABS-System mit einem Gehäuse, das einen Hydraulikeingang und einen damit über eine hydraulische Leitung verbundenen Hydraulikausgang aufweist, wobei ein gegen eine Federkraft eines Federelements zu öffnender Volumenspeicher vorgesehen ist, der bei einer aktivierten Antiblockierfunktion das Volumen der hydraulischen Leitung vergrößert, wobei ein Linearantrieb, insbesondere Proportionalmagnet, mit einem Anker vorgesehen ist und eine Verfahrbewegung des Ankers das Öffnen des Volumenspeichers bewirkt, wobei das Federelement als Gasfeder ausgebildet ist.

Ein Druckmodulator ist beispielsweise durch die DE 10 2014 007 717 B3 bekannt geworden.

Der dort offenbarte Druckmodulator weist eine relativ große Länge auf. Weiterhin ist ein Teil der hydraulischen Leitung relativ zum Gehäuse des Druckmodulators bewegbar, wodurch sich eine Störungsanfälligkeit ergeben kann.

Aus der Druckschrift DE 195 01 487 A1 ist eine Einrichtung zur kombinierten Antiblockier- und Antischlupfregelung für Motorräder bekannt.

Eine Vorrichtung mit einem elastischen Körper für ABS-Systeme ist aus der US 5 044 701 A bekannt.

Des Weiteren beschreibt die Druckschrift EP 0 209 817 A1 einen Druckverstärker und -modulator.

Aufgabe der vorliegenden Erfindung ist es, einen Druckmodulator für ein ABS-System, insbesondere für ein ABS-System eines Zweirads, bereitzustellen, der besonders klein bauend und funktionssicher ist.

Gelöst wird diese Aufgabe erfindungsgemäß durch einen Druckmodulator für ein ABS-System mit den Merkmalen gemäß Patentanspruch 1.

Wird demnach das Blockieren eines Rads detektiert, so kann der Anker gegen die Rückstellkraft des Federelements bewegt werden und damit einen Volumenspeicher schaffen oder öffnen, in den Hydraulikmedium fließen kann. Dadurch wird der Druck des Hydraulikmediums reduziert und somit der Druck auf die Bremsbacken einer Bremszange reduziert, sodass sich das Rad wieder drehen kann.

Dadurch, dass als Federelement eine Gasfeder vorgesehen ist, kann der Anker und damit das Gehäuse verkürzt werden. Dadurch ergibt sich ein im Vergleich zum Stand der Technik klein bauender, insbesondere kürzerer Druckmodulator. Außerdem kann durch die erfindungsgemäße Anordnung vermieden werden, dass ein Teil der Hydraulikleitung relativ zum Gehäuse des Druckmodulators bewegbar ist. Dadurch wird die Funktionssicherheit des Druckmodulators erhöht. Außerdem kann die Anzahl dynamischer Abdichtungen verringert werden.

Dadurch, dass keine Feder, wie z.B. eine Stahlfeder, notwendig ist, entsteht weniger Reibung, da die Federreibung wegfällt. Somit kann ein Federelement eingespart werden. Außerdem ist die Gasfeder ohne zusätzliche Dichtung realisierbar. Es werden also wenige Bauteile benötigt, sodass geringe Kosten entstehen. Vorzugsweise ist die Gasfeder als Luftfeder ausgebildet.

Der kompakten Ausgestaltung des Druckmodulators förderlich ist es zudem, dass das Gasfedervolumen im Anker ausgebildet ist. Die Gasfeder ist auf geringerer Länge realisierbar als beispielsweise eine Schraubenfeder, sodass die Länge des Ankers kurz ausfallen kann.

Vorzugsweise ist ein in den Anker, insbesondere das Gasfedervolumen, ragender, fest mit dem Gehäuse verbundener Steuerkolben vorgesehen. Der Steuerkolben stellt den Kolben der Gasfeder dar. Eine Gasfeder hat den Vorteil, dass ein unter (Hoch-)druck stehendes Gas zur Bereitstellung der Federkraft genutzt wird. Vorteile gegenüber Schraubenfedern sind die vom Federweg nahezu unabhängige Kraft und der geringe Platzbedarf.

Weitere Vorteile ergeben sich, wenn der Druckmodulator genau eine dynamische Dichtung aufweist. Die dynamische Dichtung kann zwischen dem Anker und dem Steuerkolben wirken. Die Funktionssicherheit kann erhöht werden, wenn wenige dynamische Dichtungen vorgesehen sind.

Der Steuerkolben kann als Hohlkörper ausgebildet sein. Dadurch ist es insbesondere möglich, das Gasfedervolumen durch den Steuerkolben hindurch mit einem Gas mit einem vorgegebenen Druck zu befüllen. In diesem Zusammenhang ist es vorteilhaft, wenn der Steuerkolben mit einer verschließbaren Gasleitung verbunden ist, mittels derer das Gasfedervolumen mit einem Gas, insbesondere Luft, befüllt werden kann.

Besondere Vorteile ergeben sich, wenn der Anker von Hydraulikmedium umströmbar in der hydraulischen Leitung angeordnet ist. Insbesondere kann der Anker im Gehäuse geführt sein und kann die Hydraulikflüssigkeit eine Schmierung des Ankers bewirken, sodass dieser verschleiß- und reibungsarm im Gehäuse bewegbar ist. Insbesondere kann das Hydraulikmedium über das Führungsspiel zwischen dem Anker und einer Führungsbuchse oder Gehäusewand durchgeführt sein.

Weiterhin kann vorgesehen sein, dass der Anker zumindest eine Hydraulikfluidausnehmung aufweist, insbesondere an seiner Mantelfläche zumindest eine sich in Längsrichtung des Ankers oder wendelförmig erstreckende Rille aufweist. Somit kann Hydraulikflüssigkeit über die Rille entlang des Ankers fließen. Alternativ oder zusätzlich ist es denkbar, dass der Anker in Längsrichtung des Ankers ausgerichtete Durchgangsöffnungen aufweist, durch die hindurch Hydraulikflüssigkeit vom Hydraulikeingang zum Hydraulikausgang des Druckmodulators fließen kann.

Gemäß einer besonders vorteilhaften Ausgestaltung der Erfindung kann vorgesehen sein, dass in der hydraulischen Leitung eine durch den Anker betätigbare Ventilanordnung vorgesehen ist. Insbesondere kann das Ventil durch den Anker geöffnet werden, wenn dieser sich in einer Ausgangsstellung befindet, d. h. durch das Federelement bis zu einem definierten Maximaldruck in eine vorgegebene Stellung gedrückt wird. Dadurch kann der Anker beispielsweise gegen eine, insbesondere federbeaufschlagte, Kugel eines Rückschlagventils drücken und dadurch das Ventil öffnen. Wird dagegen die Antiblockierfunktion aktiviert und der Anker entgegen der Federkraft des Federelements bewegt, wird der Kontakt zwischen dem Anker und der Kugel des Ventils aufgelöst, sodass die Kugel das Ventil verschließt und ein weiteres Nachführen von Hydraulikflüssigkeit durch einen Geberzylinder verhindert wird. Somit kann ein Geberzylinder, der mit einer Betätigungsvorrichtung in Verbindung steht, bei aktivierter ABS-Funktion von der hydraulischen Leitung im Inneren des Druckmodulators abgekoppelt werden und kann der Druck des Hydraulikmediums durch die Druckmodulationsanordnung eingestellt werden.

Durch eine so ausgeführte Ventilanordnung ist nur ein einziges Ventil im Druckmodulator notwendig. Als Alternative zur Kugel wäre auch ein Bauteil mit darauf angebrachter Dichtung denkbar, welches eine Bohrung zwischen hydraulischem Eingang und dem Anker verschließt.

In dem Gehäuse kann eine Elektronikschaltung angeordnet sein. Insbesondere kann die Elektronikschaltung in den Druckmodulator voll integriert sein. Somit kann die Elektronikschaltung, die zur Ansteuerung des Linearantriebs dient, in dem Druckmodulator vorgesehen sein. Es ergibt sich damit eine besonders platzsparende Anordnung. Somit können alle zeitkritischen Signale, Berechnungen, Leistungsendstufen usw. innerhalb des Druckmodulators erzeugt bzw. vorhanden sein, sodass weniger sicherheitstechnische und zeitkritische Signalverbindungen notwendig sind.

Weiterhin kann ein den Druck im Volumenspeicher erfassender Drucksensor vorgesehen sein. Der Drucksensor kann über eine direkte hydraulische Anbindung mit dem Volumenspeicher verbunden sein. Dies ist eine kostengünstige, leichte Lösung, die wenig Platz benötigt.

Dabei kann der Drucksensor auf einer die Elektronikschaltung aufweisenden Platine angeordnet sein. Der Drucksensor kann insbesondere in SMD-Bauweise besonders kostengünstig direkt auf der Platine integriert sein.

Durch die Integration der Platine in das robuste metallische Gehäuse des Druckmodulators wird sie neben Umwelteinflüssen wie Dreck, Wasser, Staub auch vor EMV-Störungen wie Abstrahlungen von anderen Steuergeräten, Motoren oder Ähnlichem geschützt. Die Integration von Drucksensor, Beschleunigungssensor und Microcontroller verhindert auch eine Störung der Signale durch Magnetfelder, da Signalwege zwischen Sensor und Controller quasi nicht mehr vorhanden sind.

Auch wird das Umfeld des Druckmodulators durch die Integration in das metallische Gehäuse vor der Abstrahlung des Druckmodulators und dessen Elektronik geschützt. So lassen sich Anforderungen an EMV-Verträglichkeit leichter umsetzen.

Die Elektronikschaltung kann in einer separaten Kammer des Gehäuses und dadurch geschützt vor Hydraulikflüssigkeit angeordnet sein. Insbesondere kann sich die elektronische Schaltung axial neben dem Volumenspeicher befinden. Damit Hydraulikflüssigkeit in den Volumenspeicher gelangen kann, kann die hydraulische Leitung durch die Elektronikschaltung, insbesondere die Platine der Elektronikschaltung, hindurchgeführt sein. Mögliche Positionen sind dabei eine Anordnung zwischen hydraulischem Eingang und Volumenspeicher oder zwischen Volumenspeicher und hydraulischem Ausgang.

In den Rahmen der Erfindung fällt außerdem eine hydraulische Bremsanlage mit Antiblockierfunktion, umfassend einen den hydraulischen Druck erzeugenden Geberzylinder, der über eine hydraulische Leitung, in der ein erfindungsgemäßer Druckmodulator angeordnet ist, mit einer Radbremse hydraulisch kommunizierend verbunden ist.

Der Druckmodulator kann einen Bremskraftverstärker aufweisen. Erfindungsgemäß ist somit ein Druckmodulator mit integriertem Bremskraftverstärker vorgesehen. Der Druckmodulator kann an einer Stelle des Zweirads angeordnet werden, wo er nicht stört. Es ist daher kein Problem, wenn der Druckmodulator an dieser Stelle etwas größer baut, insbesondere mit einem größeren Durchmesser. Dies wiederum führt dazu, dass reibungsärmere Dichtungen verwendet werden können.

Dank des Bremskraftverstärkers und dessen Druckübersetzung kann der Linearantrieb schwächer und somit kompakter, leichter und günstiger ausgelegt werden.

Grundsätzlich ist es denkbar, dass der Druckmodulator und der Bremskraftverstärker ein gemeinsames, einstückiges Gehäuse aufweisen oder dass zumindest die Außenwand des Gehäuses einstückig ausgebildet ist. Aus Herstellungsgründen kann es jedoch vorteilhaft sein, wenn ein Bremskraftverstärkergehäuseteil mit einem Aktorgehäuseteil verbunden ist, wobei die Druckmodulationsanordnung im Aktorgehäuseteil angeordnet sein kann. Somit können der Teil des Druckmodulators, der die Druckmodulationsanordnung aufweist, und der Bremskraftverstärker zunächst getrennt hergestellt werden und anschließend miteinander verbunden werden. Dabei können das Bremskraftverstärkergehäuseteil und das Aktorgehäuseteil verclipst sein. Alternativ ist es denkbar, das Bremskraftverstärkergehäuseteil und das Aktorgehäuseteil miteinander zu verschrauben. Auch Bördeln oder Pressen sind zum Verbinden der Gehäuseteile denkbar.

Besondere Vorteile ergeben sich, wenn in dem Gehäuse ein Zylinderraum ausgebildet ist, in dem ein Stufenkolben mit zwei Abschnitten unterschiedlicher Querschnittsfläche angeordnet ist, wobei zwischen einer Gehäusewand und einem Stufenkolbenabschnitt größerer Querschnittfläche ein Füllvolumen und zwischen einer Gehäusewand und einem Stufenkolbenabschnitt kleinerer Querschnittsfläche ein Arbeitsvolumen ausgebildet ist. Durch den Stufenkolben wird der Bremskraftverstärker auf einfache Art und Weise, insbesondere platzsparende Art und Weise, realisiert. Insbesondere kann der Zylinderraum zumindest überwiegend im Bremskraftverstärkergehäuseteil angeordnet sein.

Der Stufenkolben kann gegen die Rückstellkraft eines Rückstellelements bewegbar sein. Beispielsweise kann der Stufenkolben dazu ferromagnetisch ausgebildet sein und durch einen Magneten als Rückstellelement bewegt werden. Alternativ ist es denkbar, ein Federelement als Rückstellelement vorzusehen.

Zwischen einem Gehäuseabschnitt und dem Stufenkolbenabschnitt größerer Querschnittsfläche kann ein Ringraum ausgebildet sein, in dem das Rückstellelement angeordnet ist. Grundsätzlich ist es denkbar, das Rückstellelement, welches als Federelement, insbesondere Schraubenfeder, ausgebildet sein kann, auch im Arbeitsraum vorzusehen. Dies hätte jedoch den Nachteil, dass das Rückstellelement mit einem geringeren Durchmesser ausgebildet werden müsste. Außerdem würde das Rückstellelement an dieser Position die Baugröße des Bremskraftverstärkers vergrößern. Der Ringraum ist für die Funktion des Bremskraftverstärkers ohnehin vorteilhaft. Er wird erfindungsgemäß auch für die Anordnung des Rückstellelements genutzt. Dadurch wird keine zusätzliche Baulänge verursacht. Die Anordnung des Rückstellelements im Ringraum bewirkt weiterhin, dass der vom Stufenkolben zurückgelegte Weg durch das Rückstellelement begrenzt wird. Außerdem kann an dieser Stelle eine relativ weiche Feder bei kleiner axialer Länge des Rückstellelements vorgesehen werden, die die gleiche Steifigkeit aufweist wie eine Feder, die im Arbeitsraum alternativ mit deutlich größeren Dimensionen angeordnet werden müsste.

Erfindungsgemäß kann weiterhin vorgesehen sein, dass der Ringraum ohne Atmosphärenanschluss ausgebildet ist. Wird eine Bremsung ausgeführt, wird demnach die Luft, die im Ringraum vorhanden ist, komprimiert. Dadurch kann die Bremskraft begrenzt werden. Außerdem kann das Rückstellelement im Ringraum dadurch schwächer dimensioniert werden. Wenn kein Atmosphärenanschluss vorhanden ist, kann auch sichergestellt werden, dass kein Schmutz in den Zylinderraum gelangt. Die komprimierte Luft kann auch weiterhin das Rückstellelement unterstützen, um den Stufenkolben in seine Ausgangsstellung zurückzugbewegen, wenn keine Bremsung benötigt wird. Auch die Ausfallsicherheit der Bremse wird durch den fehlenden Atmosphärenanschluss erhöht. Tritt eine Undichtigkeit am Stufenkolben auf, so gelangt die Hydraulikflüssigkeit lediglich in den Ringraum. Wäre ein Atmosphärenanschluss vorhanden, könnte Bremsflüssigkeit entweichen, mit der Folge, dass keine Bremsung mehr durchgeführt werden könnte.

Gemäß einer alternativen Ausführungsform kann der Ringraum mit einem Entlüftungskanal in Verbindung stehen. In den Ringraum gelangendes Hydraulikmedium kann dann über den Entlüftungskanal abgelassen werden.

Besondere Vorteile ergeben sich, wenn der Zylinderraum und ein Läuferraum koaxial angeordnet sind. Dies bedeutet, dass der Bremskraftverstärker und die Druckmodulationsanordnung in Strömungsrichtung des Hydraulikmediums vom Hydraulikeingang zum Hydraulikausgang gesehen hintereinander angeordnet sind. Durch diese Anordnung erhöht sich zwar die Länge des Druckmodulators etwas, dafür kann er relativ schlank gehalten werden.

Besondere Vorteile ergeben sich dadurch, dass im Stufenkolben ein Ventil angeordnet ist. Dadurch kann das Ventil selbst geöffnet sein. Wenn demnach bei einer Bremsbetätigung Hydraulikmedium gefördert wird, durchströmt das Hydraulikmedium zunächst das Arbeitsvolumen, das Ventil und das Füllvolumen und gelangt in den oder die Zylinderräume, in denen der oder die Bremskolben einer Bremszange angeordnet sind. Dies entspricht einer so genannten Füllphase. Wenn nun sämtliche Räume in der Bremszange mit Hydraulikflüssigkeit gefüllt sind und die Bremsbeläge, die durch die Bremskolben beaufschlagt sind, an der Bremsscheibe anliegen, steht an beiden Seiten des Stufenkolbens (im Füllvolumen und Arbeitsvolumen) der gleiche Druck an. Da die Stufenkolbenabschnitte jedoch unterschiedliche Querschnittsflächen aufweisen, bewirkt dies, dass der Stufenkolben im Zylinderraum verlagert wird. Bei der Verlagerung des Stufenkolbens wird das Ventil geschlossen, sodass bei einer weiteren Druckbeaufschlagung mittels der Betätigungsvorrichtung der Stufenkolben verlagert wird und die Hydraulikflüssigkeit im Arbeitsvolumen des Zylinderraums wirksam wird. Dies bedeutet, dass bei einer weiteren Betätigung der Betätigungsvorrichtung die Bremskolben die Bremsbeläge mit einer Normalkraft gegen die Bremsscheibe beaufschlagen und somit eine Bremsung erfolgt.

Besonders bevorzugt ist es, wenn sich das Ventil über ein Federelement am Stufenkolben abstützt. Dadurch ergibt sich eine kompakte Anordnung.

Besondere Vorteile ergeben sich, wenn ausgangsseitig des Stufenkolbens ein Filterelement vorgesehen ist. Dadurch kann verhindert werden, dass beim Zurückfließen von Hydraulikmedium Partikel in die hydraulische Leitung gelangen und dort für Verschleiß und Störungen sorgen.

Weitere Vorteile ergeben sich, wenn im Bereich des Hydraulikeingangs ein Filterelement vorgesehen ist. Durch diese Maßnahme wird verhindert, dass Partikel vom Eingang her in den Druckmodulator gelangen. Insbesondere ist das Vorsehen von zwei Filterelementen - eines im Bereich des Hydraulikausgangs und eines im Bereich des Hydraulikeingangs - besonders vorteilhaft. Dadurch kann sichergestellt werden, dass keine Partikel oder Verschmutzung in den Innenraum, insbesondere die hydraulische Leitung und/oder den Läuferraum des Druckmodulators, gelangen. Dadurch kann die Funktionsfähigkeit der im Druckmodulator angeordneten Ventile sichergestellt werden. Auch die Bewegung eines Ankers relativ zum Gehäuse im Hydraulikmedium kann dadurch störungsfrei und verschleißarm verlaufen.

Die Filterelemente haben aufgrund ihrer Anordnung keinen Einfluss auf die Regeldynamik des Druckmodulators, insbesondere der ABS-Regelung.

Das Gehäuse des Druckmodulators kann zumindest abschnittsweise ferromagnetisch ausgebildet sein. Somit kann das Gehäuse verwendet werden, um einen magnetischen Kreis zu bilden, der zur Bewegung des Ankers verwendet wird.

Der Anker kann in einem das Hydraulikmedium aufweisenden Läuferraum, insbesondere Ankerraum, angeordnet sein, wobei zusätzlich zum Läuferraum und außerhalb des Ankers zumindest ein Hydraulikkanal vorgesehen ist, der einen Hydraulikmediumtransport am Anker vorbei erlaubt. Somit kann sichergestellt werden, dass Hydraulikmedium schnell am Anker vorbei von einem Ende des Druckmodulators zum anderen Ende des Druckmodulators befördert werden kann, ohne dass durch den Druckmodulator eine Dämpfungswirkung erfolgt.

Der Hydraulikkanal kann zumindest abschnittsweise in einer Gehäusewandung verlaufen. Dadurch ist es möglich, den Luftspalt zwischen dem ferromagnetischen Gehäuse und dem Anker gering zu halten und dennoch einen ausreichenden Transport von Hydraulikmedium sicherzustellen.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung ist ein Ausführungsbeispiel der Erfindung dargestellt und in der nachfolgenden Beschreibung näher erläutert.

Es zeigen:
- Fig. 1: eine schematische Längsschnittdarstellung eines erfindungsgemäßen Druckmodulators bei nicht aktivierter ABS-Funktion;
- Fig. 2: ein Detail A der Fig. 1;
- Fig. 3: ein Detail B der Fig. 1;
- Fig. 4: ein Detail C der Fig. 1.

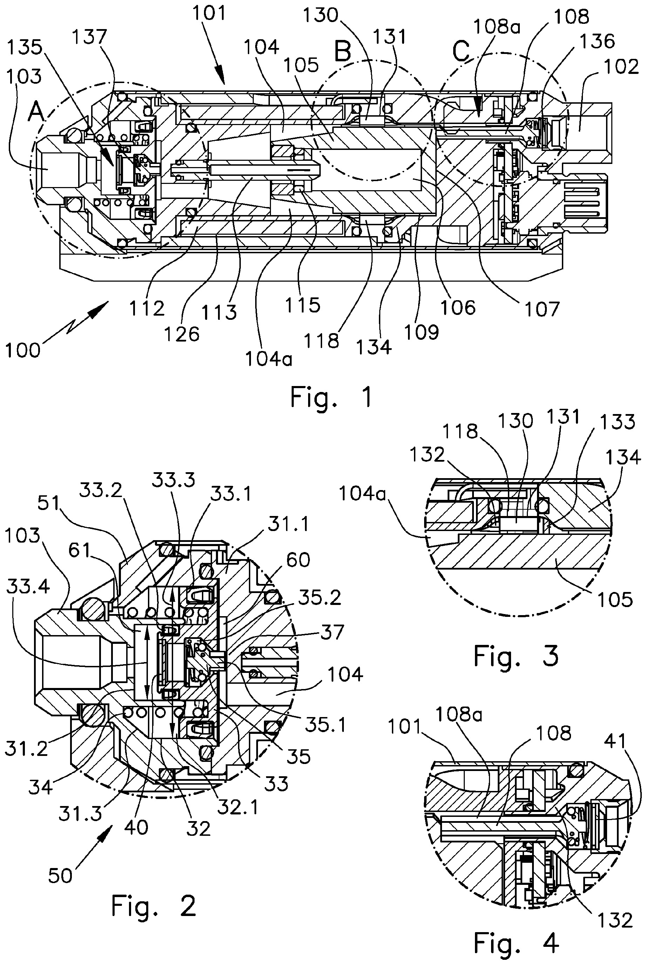

Die Fig. 1 zeigt einen erfindungsgemäßen Druckmodulator 100. Der Druckmodulator 100 umfasst ein Gehäuse 101 mit einem Hydraulikeingang 102 und einem Hydraulikausgang 103. Der Hydraulikeingang 102 und der Hydraulikausgang 103 sind durch eine Hydraulikleitung 104 im Inneren des Gehäuses 101 miteinander verbunden.

Die Hydraulikein- und -ausgänge 102, 103 können über Steckverbinder realisiert werden, um im Servicefall eine einfache und werkzeuglose Montage/Demontage zu ermöglichen.

Bei nicht aktivierter ABS-Funktion befindet sich ein als Anker 105 ausgebildeter Läufer aus Stahl oder einem Sondermaterial in einer in der Fig. 1 gezeigten Nullstellung. Der Anker 105 ist in einem als Ankerraum 104a ausgebildeten Läuferraum, der Teil der Hydraulikleitung 104 ist, bewegbar angeordnet und in der gezeigten Stellung aufgrund der Federkraft des Federelements 106, welches als Gasfeder ausgebildet ist, nach rechts bewegt, sodass er an einer Gehäusewand 107 anliegt. In dieser Stellung drückt der Anker 105 gegen ein Ventilelement 108, sodass ein Ventil 108a geöffnet ist und Hydraulikmedium das Ventil 108a durchströmen kann. Das Hydraulikmedium kann dann im Ankerraum 104a weiterhin entlang eines Spalts zwischen der Mantelfläche des Ankers 105 und der Gehäusewand 109 zum Hydraulikausgang 103 fließen, sofern ein noch näher zu beschreibendes Ventil in einem Bremskraftverstärker 50 geöffnet ist.

Das Gehäuse 101 weist eine Innenwand 118 mit einer Durchgangsöffnung auf, durch die der Anker 105 ragt. Die Innenwand 118 ist aus ferromagnetischem Material ausgebildet.

Bei aktivierter Antiblockierfunktion (ABS-Funktion) wird ein Linearantrieb, insbesondere ein Proportionalmagnet 126, aktiviert, der den Anker 105 entgegen der Federkraft des Federelements 106 bewegt. Dadurch wird das Volumen der Hydraulikleitung 104 zwischen der Gehäusewand 107 und dem Anker 105 vergrößert, sodass der durch das Hydraulikmedium auf eine Radbremse ausgeübte Druck geringer wird und die Radbremse geöffnet wird. Das Verschieben des Ankers 105 nach links hat weiterhin den Effekt, dass das Ventilelement 108 nach links bewegt wird und somit das Ventil 108a verschließt. Ein Geberzylinder im Bereich einer Bremsbetätigungsvorrichtung ist somit von der Radbremse abgekoppelt.

Der Proportionalmagnet 126 weist eine zylinderförmige Spulenanordnung 112 auf, durch die der Anker 105 angezogen werden kann.

Das Federelement 106 umfasst ein Gasfedervolumen 106a, das im Anker 105 ausgebildet ist. In das Gasfedervolumen 106a ragt ein nicht magnetischer Steuerkolben 113, der fest mit dem Gehäuse 101 verbunden und gegenüber dem Gasfedervolumen 106a durch die dynamische Dichtung 115 abgedichtet ist. Insbesondere ist der Anker 105 gegenüber dem Steuerkolben 113 über die dynamische Dichtung 115 abgedichtet. Der Steuerkolben 113 ist hohlzylindrisch ausgebildet, sodass das Gasfedervolumen 106a mit einem Gas, insbesondere Luft, mit einem vorgegebenen Druck befüllt werden kann. Der Steuerkolben 113 steht dazu mit einer nicht dargestellten verschließbaren Gasleitung in Verbindung. Der Vorspanndruck des Federelements 106 sollte mindestens so hoch gewählt sein wie der maximale hydraulische Druck im Druckmodulator 100, um das System im nicht bestromten Zustand in seiner Nullstellung zu halten.

Das Gehäuse 101 ist zumindest im Bereich der Spulenanordnung 112 magnetisch leitend, insbesondere ferromagnetisch, ausgebildet.

Der Bremskraftverstärker 50 (s. auch Fig. 2) weist ein Bremskraftverstärkergehäuseteil 51 auf, das mit einem Aktuatorgehäuseteil 101b verbunden ist. Im Gehäuse 101, insbesondere im Bremskraftverstärkergehäuseteil 51, ist ein Zylinderraum 32 vorhanden. In dem Zylinderraum 32 ist ein Stufenkolben 33 angeordnet, der einen Abschnitt 33.1 mit größerem Querschnitt und einen Abschnitt 33.2 mit kleinerem Querschnitt aufweist. Zwischen dem Abschnitt 33.1 und der Gehäusewand 31.1 ist ein Füllvolumen 60 und zwischen dem Abschnitt 33.2 und der Gehäusewand 31.2 ist ein Arbeitsvolumen 61 ausgebildet. Der Zwischenraum zwischen dem Abschnitt 33.1 und dem Gehäuseabschnitt 31.3 bildet einen Ringraum 32.1. Der Stufenkolben 33 stützt sich über ein Rückstellelement 34 an dem Gehäuseabschnitt 31.3 ab.

Das Vorsehen eines Stufenkolbens 33 hat den Vorteil, dass dadurch einfach ein Bremskraftverstärker 50 realisiert wird. Der Bremskraftverstärker 50 wird dabei innerhalb des Gehäuses 101 realisiert. Dies spart Gewicht, Kosten und ermöglicht die Kombination von einem schlanken Design bei einer erhöhten Bremskraft.

Innerhalb des Stufenkolbens 33 ist ein Ventil 35 angeordnet. Bei Einleitung einer Bremsung ist das Ventil 35 zunächst geöffnet und ermöglicht ein freies Durchströmen von Hydraulikmedium bis zur Anlage von Bremsbelägen an einer Bremsscheibe. Das Ventil 35 ist durch Anlage des Ventilstößels 35.1 an einer Gehäusewandung 37 bei nach rechts verlagertem Stufenkolben 33 geöffnet.

Eine Bremsanlage, umfassend eine Betätigungsvorrichtung, nicht arbeitenden Stufenkolben 33 und nicht dargestellte Bremskolben, arbeitet in dieser Phase mit einem geringen Verstärkungsfaktor. Dies bedeutet, dass mit geringem von einem Betätigungselement einer Betätigungsvorrichtung zurückgelegtem Weg eine relativ große Verstellung der Bremskolben erfolgt.

Sobald Beläge der Radbremse an einer Bremsscheibe anliegen, baut sich ein hydraulischer Druck auf, der auf beiden Seiten des Stufenkolbens 33 gleich groß ist. Da die Kolbenflächen an den Stirnseiten unterschiedlich groß sind, wird der Stufenkolben 33 jedoch nach links bewegt.

Entsprechend der Flächendifferenz der Kolbenflächen 33.3, 33.4 des Stufenkolbens 33 wird der Stufenkolben 33 daher gegen das Rückstellelement 34 gedrückt und gegen dessen Rückstellkraft und unter Kompression von im Ringraum 32.1 enthaltener Luft bewegt. Die Bewegung des Stufenkolbens 33 bewirkt ein Verschließen des Ventils 35 aufgrund der Wirkung eines Federelements 35.2, das sich am Stufenkolben 33 abstützt.

Der Ringraum 32.1 steht im gezeigten Ausführungsbeispiel genau wie der Innenraum des Ankers 105 (über den hohlen Steuerkolben 113) mit einem Entlüftungskanal 150 in Verbindung. Bei Bedarf kann Hydraulikmedium, das in den Ringraum 32.1 und/oder den Innenraum des Ankers 105 gelangt, abgelassen werden, um die Funktionsfähigkeit sicherzustellen.

Durch das Kräftegleichgewicht beidseits des Stufenkolbens 33 ergibt sich trotz geringen Betätigungsdruckes im Füllvolumen 60 ein hoher Druck im Arbeitsraum 61.

Die Bremsanlage arbeitet in dieser Phase mit einem großen Verstärkungsfaktor.

Die Innenwand 118 (Fig. 1) weist entlang ihres Umfangs Durchgangsöffnungen 130 auf, die einen Abschnitt von Hydraulikkanälen 131 bilden. Die Durchgangsöffnungen 130 verlaufen parallel zum Ankerraum 104a. Sie sind außerhalb des Ankers 105 angeordnet und insbesondere im Bereich des Gehäuses 101 angeordnet. Die Hydraulikkanäle 131 stellen quasi einen Bypass des Ankerraums 104a für das Hydraulikmedium dar. Somit kann Hydraulikmedium vom Hydraulikeingang 102 zum Hydraulikausgang 103 nicht nur im Ankerraum 104a entlang des Ankers 105 transportiert werden, sondern kann am Anker 105 vorbei durch die Hydraulikkanäle 131 transportiert werden. Somit kann Hydraulikmedium schneller vom Hydraulikeingang 102 zum Hydraulikausgang 103 transportiert werden, ohne dass eine Dämpfungswirkung entsteht.

Der Fig. 2 kann man auch entnehmen, dass der Stufenkolben 33 ein Filterelement 40 aufweist, das das Ventil 35 vor Verschmutzung schützt.

Wie sich der Darstellung der Fig. 3 entnehmen lässt, weisen die Hydraulikkanäle 131 Leitungsabschnitte 132, 133 auf, die sowohl in den Ankerraum 104a als auch in die Durchgangsöffnungen 130 münden und in einer Gehäusewandung 134 ausgebildet sind. Insbesondere sind die Hydraulikkanäle 131 im Bereich der Innenwand 118 angeordnet, nämlich an der Stelle, an der ein besonders kleiner Luftspalt zwischen dem Gehäuse 101 und dem Anker 106 realisiert werden muss.

Der Fig. 4 kann man entnehmen, dass im Bereich des Hydraulikeingangs 102 ein Filterelement 41 angeordnet ist, das das Ventil 108a mit dem Ventilelement 108 vor verschmutztem Hydraulikmedium schützt, das von einem nicht gezeigten Geberzylinder kommt.

Zur Erfassung eines blockierenden Rads können Sensoren vorgesehen sein, deren Signale eine Steuereinrichtung empfängt, die die Druckmodulationsanordnung, umfassend den Linearantrieb und das Ventil 108a sowie die Hydraulikleitung 104, steuert.

## Patentansprüche

1. Druckmodulator (100) für ein ABS-System mit einem Gehäuse (101), das einen Hydraulikeingang (102) und einen damit über eine hydraulische Leitung (104) verbundenen Hydraulikausgang (103) aufweist, wobei ein gegen eine Federkraft eines Federelements (106) zu öffnender Volumenspeicher vorgesehen ist, der bei einer aktivierten Antiblockierfunktion das Volumen der hydraulischen Leitung (104) vergrößert, wobei ein Linearantrieb, insbesondere Proportionalmagnet (126), mit einem Anker (105) vorgesehen ist und eine Verfahrbewegung des Ankers (105) das Öffnen des Volumenspeichers bewirkt, wobei das Federelement (106) als Gasfeder ausgebildet ist, **dadurch gekennzeichnet, dass** das Gasfedervolumen im Anker (105) ausgebildet ist.

2. Druckmodulator nach Anspruch 1, **dadurch gekennzeichnet, dass** ein in den Anker (105), insbesondere in das Gasfedervolumen, ragender, fest mit dem Gehäuse (101) verbundener Steuerkolben (113) vorgesehen ist.

3. Druckmodulator nach einem der vorhergehenden Ansprüche, **dadurch gekennzeichnet, dass** der Druckmodulator (100) genau eine dynamische Dichtung (115) aufweist.

4. Druckmodulator nach den beiden Ansprüchen 2 und 3, **dadurch gekennzeichnet, dass** die dynamische Dichtung (115) zwischen dem Anker (105) und dem Steuerkolben (113) wirkt.

5. Druckmodulator nach einem der vorhergehenden Ansprüche 2 oder 4, **dadurch gekennzeichnet, dass** der Steuerkolben (113) als Hohlkörper ausgebildet ist.

6. Druckmodulator nach einem der vorhergehenden Ansprüche 2, 4 oder 5, **dadurch gekennzeichnet, dass** der Steuerkolben (113) mit einer verschließbaren Gasleitung verbunden ist.

7. Druckmodulator nach einem der vorhergehenden Ansprüche, **dadurch gekennzeichnet, dass** der Anker (105) von Hydraulikmedium umströmbar in der hydraulischen Leitung (104) angeordnet ist.

8. Druckmodulator nach einem der vorhergehenden Ansprüche, **dadurch gekennzeichnet, dass** der Druckmodulator (100) einen Bremskraftverstärker (50) aufweist.

9. Druckmodulator nach einem der vorhergehenden Ansprüche, **dadurch gekennzeichnet, dass** ein Ventil (108a) vorgesehen ist, durch das die hydraulische Leitung (104) im Bereich des Hydraulikeingangs (102) bei aktivierter ABS-Funktion verschließbar ist.

10. Druckmodulator nach einem der vorhergehenden Ansprüche, **dadurch gekennzeichnet, dass** in dem Gehäuse (101) ein Zylinderraum (32) ausgebildet ist, in dem ein Stufenkolben (33) mit zwei Abschnitten (33.1, 33.2) unterschiedlicher Querschnittsfläche angeordnet ist, wobei zwischen einer Gehäusewand (31.1) und einem Stufenkolbenabschnitt (33.1) größerer Querschnittsfläche ein Füllvolumen (60) und zwischen einer Gehäusewand (31.2) und einem Stufenkolbenabschnitt (33.2) kleinerer Querschnittsfläche ein Arbeitsvolumen (61) ausgebildet ist.

11. Druckmodulator nach Anspruch 10, **dadurch gekennzeichnet, dass** der Stufenkolben (33) gegen die Rückstellkraft eines Rückstellelements (34) bewegbar ist.

12. Druckmodulator nach einem der vorhergehenden Ansprüche 10 oder 11, **dadurch gekennzeichnet, dass** im Stufenkolben (33) ein Ventil (35) angeordnet ist.

13. Druckmodulator nach Anspruch 12, **dadurch gekennzeichnet, dass** sich das Ventil (35) über ein Federelement (35.2) am Stufenkolben (33) abstützt.

14. Druckmodulator nach einem der vorhergehenden Ansprüche 10 bis 13, **dadurch gekennzeichnet, dass** ausgangsseitig des Stufenkolbens (33) ein Filterelement (40) vorgesehen ist.

15. Druckmodulator nach einem der vorhergehenden Ansprüche, **dadurch gekennzeichnet, dass** im Bereich des Hydraulikeingangs (102) ein Filterelement (41) vorgesehen ist.

## Claims

1. Pressure modulator (100) for an anti-lock braking system (ABS), comprising a casing (101) having a hydraulic input (102) and a hydraulic output (103) connected thereto via a hydraulic line (104), wherein a volume accumulator designed to be opened against the spring force of a spring element (106) is provided, said volume accumulator increasing the volume of the hydraulic line (104) when an anti-lock function is activated, wherein a linear drive, in particular a proportional solenoid (126), comprising an armature (105) is provided and displacement of the armature (105) effects opening of the volume accumulator and wherein the spring element (106) is designed as a gas spring, **characterised in that** the gas spring volume is formed in the armature (105).

2. Pressure modulator according to claim 1, **characterised by** a control piston (113) rigidly connected to the casing (101) and projecting into the armature (105), in particular into the gas spring volume.

3. Pressure modulator according to one of the preceding claims, **characterised in that** the pressure modulator (100) has precisely one dynamic seal (115).

4. Pressure modulator according to both claims 2 and 3, **characterised in that** the dynamic seal (115) acts between the armature (105) and the control piston (113).

5. Pressure modulator according to either of the preceding claims 2 or 4, **characterised in that** the control piston (113) is designed as a hollow part.

6. Pressure modulator according to one of the preceding claims 2, 4 or 5, **characterised in that** the control piston (113) is connected to a closable gas line.

7. Pressure modulator according to one of the preceding claims, **characterised in that** the armature (105) is arranged in the hydraulic line (104) in such a manner that hydraulic medium can flow around it.

8. Pressure modulator according to one of the preceding claims, **characterised in that** the pressure modulator (100) has a brake booster (50).

9. Pressure modulator according to one of the preceding claims, **characterised by** a valve (108a) by means of which the hydraulic line (104) can be closed in the region of the hydraulic input (102) when the ABS function is activated.

10. Pressure modulator according to one of the preceding claims, **characterised in that** a cylindrical chamber (32) in which a stepped piston (33) comprising two sections (33.1, 33.2) of differing cross-sectional area is arranged is formed in the casing (101), wherein a filling volume (60) is formed between a casing wall (31.1) and a stepped piston section (33.1) having a greater cross-sectional area and a working volume (61) is formed between a casing wall (31.2) and a stepped piston section (33.2) having a smaller cross-sectional area.

11. Pressure modulator according to claim 10, **characterised in that** the stepped piston (33) can be moved against the return force of a return element (34).

12. Pressure modulator according to either of the preceding claims 10 or 11, **characterised in that** a valve (35) is arranged in the stepped piston (33).

13. Pressure modulator according to claim 12, **characterised in that** the valve (35) is supported on the stepped piston (33) via a spring element (35.2).

14. Pressure modulator according to one of the preceding claims 10 to 13, **characterised by** a filter element (40) at the output end of the stepped piston (33).

15. Pressure modulator according to one of the preceding claims, **characterised by** a filter element (41) in the region of the hydraulic input (102).

## Revendications

1. Modulateur de pression (100) pour un système ABS avec un boîtier (101), qui présente une entrée hydraulique (102) et une sortie hydraulique (103) reliée à celle-ci par le biais d'une conduite hydraulique (104), dans lequel un accumulateur de volume à ouvrir contre une force de ressort d'un élément de ressort (106) est prévu, lequel augmente en cas de fonction d'antiblocage activée le volume de la conduite hydraulique (104), dans lequel un entraînement linéaire, en particulier un aimant proportionnel (126), avec un induit (105) est prévu et un mouvement de déplacement de l'induit (105) provoque l'ouverture de l'accumulateur de volume, dans lequel l'élément de ressort (106) est réalisé comme un ressort à gaz, **caractérisé en ce que** le volume de ressort à gaz est réalisé dans l'induit (105).

2. Modulateur de pression selon la revendication 1, **caractérisé en ce qu'**un piston de commande (113) raccordé fixement au boîtier (101), pénétrant dans l'induit (105), en particulier dans le volume de ressort à gaz est prévu.

3. Modulateur de pression selon l'une quelconque des revendications précédentes, **caractérisé en ce que** le modulateur de pression (100) présente précisément une garniture dynamique (115).

4. Modulateur de pression selon les deux revendications 2 et 3, **caractérisé en ce que** la garniture dynamique (115) agit entre l'induit (105) et le piston de commande (113).

5. Modulateur de pression selon l'une quelconque des revendications précédentes 2 ou 4, **caractérisé en ce que** le piston de commande (113) est réalisé en tant que corps creux.

6. Modulateur de pression selon l'une quelconque des revendications précédentes 2, 4 ou 5, **caractérisé en ce que** le piston de commande (113) est raccordé à une conduite de gaz refermable.

7. Modulateur de pression selon l'une quelconque des revendications précédentes, **caractérisé en ce que** l'induit (105) est agencé de manière contournable par le fluide hydraulique dans la conduite hydraulique (104).

8. Modulateur de pression selon l'une quelconque des revendications précédentes, **caractérisé en ce que** le modulateur de pression (100) présente un servofrein (50).

9. Modulateur de pression selon l'une quelconque des revendications précédentes, **caractérisé en ce qu'**une soupape (108a) est prévue, par laquelle la conduite hydraulique (104) est refermable dans la zone de l'entrée hydraulique (102) en cas de fonction ABS activée.

10. Modulateur de pression selon l'une quelconque des revendications précédentes, **caractérisé en ce qu'**un espace de cylindre (32) est réalisé dans le boîtier (101), dans lequel un piston différentiel (33) est agencé avec deux sections (33.1, 33.2) de différente aire de section transversale, dans lequel un volume de remplissage (60) est réalisé entre une paroi de boîtier (31.1) et une section de piston différentiel (33.1) de plus grande aire de section transversale et un volume de travail (61) est réalisé entre une paroi de boîtier (31.2) et une section de piston différentiel (33.2) de plus petite aire de section transversale.

11. Modulateur de pression selon la revendication 10, **caractérisé en ce que** le piston différentiel (33) est mobile contre la force de rappel d'un élément de rappel (34).

12. Modulateur de pression selon l'une quelconque des revendications précédentes 10 ou 11, **caractérisé en ce qu'**une soupape (35) est agencée dans le piston différentiel (33).

13. Modulateur de pression selon la revendication 12, **caractérisé en ce que** la soupape (35) s'appuie par le biais d'un élément de ressort (35.2) sur le piston différentiel (33).

14. Modulateur de pression selon l'une quelconque des revendications précédentes 10 à 13, **caractérisé en ce qu'**un élément de filtre (40) est prévu côté sortie du piston différentiel (33).

15. Modulateur de pression selon l'une quelconque des revendications précédentes, **caractérisé en ce qu'**un élément de filtre (41) est prévu dans la zone de l'entrée hydraulique (102).
